Europäisches Patentamt

European Patent Office

Office européen des brevets

(19)

(11) Veröffentlichungsnummer: **0 254 171**

**A1**

## (12) EUROPÄISCHE PATENTANMELDUNG

(21) Anmeldenummer: 87110069.9

(22) Anmeldetag: **13.07.87**

(51) Int. Cl.⁴: **A01K 5/02**

(30) Priorität: **19.07.86 DE 3624488**

(43) Veröffentlichungstag der Anmeldung:
**27.01.88 Patentblatt 88/04**

(84) Benannte Vertragsstaaten:
**AT BE CH FR GB IT LI NL SE**

(71) Anmelder: **B. Strautmann & Söhne GmbH & Co.**
**Bielefelder Strasse 53**
**D-4518 Bad Laer 1(DE)**

(72) Erfinder: **Strautmann, Klaus Peter**
**Bielefelder Strasse 41**
**D-4518 Bad Laer(DE)**

(74) Vertreter: **Stracke, Alexander, Dipl.-Ing. et al**
**Jöllenbecker Strasse 164**
**D-4800 Bielefeld 1(DE)**

(54) **Automatische Fütterungsanlage für Rindvieh.**

(57) Eine automatische Fütterungsanlage für Rindvieh besteht aus mehreren kombinierbaren, bekannten, in Reihe geschalteten Geräten wie Ballen-Abfräsvorrichtung (5), Futtermischanlage, Förderband (6) und Transportbehälter (7), die vom entleerten Freßplatz (14) aus eingeschaltet werden und eine vorgegebene Futterration zur automatischen Auffüllung des Freßplatzes (14) liefern.

Fig. 1

EP 0 254 171 A1

## Automatische Fütterungsanlage für Rindvieh

Die Erfindung betrifft eine automatische Fütterungsanlage in der Ausgestaltung nach dem Oberbegriff des Anspruchs 1.

Bei der Rindviehfütterung wird im allgemeinen Kraftfutter für jedes Tier dosiert über Transponderfütterung oder sonstige Zufuhr gegeben. Das Grundfutter bestehend aus Gras-oder Maissilage, sowie Heu, wird im allgemeinen ad libitum (soviel wie die Tiere mögen) zugefüttert. Die Fütterung erfolgt in den meisten Ställen noch per Hand. Es sind ferner mechanische Fütterungen mit Hilfe von Förderbändern oder umlaufenden Futterbehältern, aus denen die Tiere fressen, bekannt.

Die Erfindung setzt sich zum Ziel, eine automatische Fütterung, sowie ad libitum, auch in dosierbarer Menge zu schaffen. Das besondere Ziel besteht darin, das Futter möglichst lange in einem kompakten Ballen zu lassen, so daß es frisch bleibt und erst ganz kurz vor der Fütterung abgefräst und den Tieren dosiert oder ad libitum zugeführt wird. Das System besteht darin, daß jedem Tier neues Futter gegeben wird, wenn es die alte Portion aufgefressen hat. Dabei wird nach dem Leerfressen der Futterschüssel oder dergleichen ein Kontakt ausgelöst, welcher die Futter-Dosiereinrichtung in Betrieb setzt, einen fahrbaren Transportbehälter füllt und ihn zu dem jeweiligen Futterplatz entlang einer Schiene oder dergleichen führt und entleert. Dieser, an einer Schiene entlang laufende fahrbare Transportbehälter, läuft entweder vor-oder oberhalb des Freßgitters entlang, so daß die Tiere die am Fressen sind, von dem Transportbehälter nicht gestört werden. Je nach Länge der Schiene können entsprechend der Länge des Gebäudes oder des vorhandenen Platzes viele nebeneinander liegende Futterplätze beschickt werden. Wenn die baulichen Verhältnisse es erforderlich machen, kann der Behälter auch um Ecken geleitet werden, so daß weitere Freßplätze mit versorgt werden können. Über eine Transponderschaltung könnte auch die an einen bestimmten Platz z.B. für einen Tag zuzuführende Futtermenge bei der Befüllstation des Behälters dosiert zugegeben werden.

Diese Fütterungsautomatik hat den Vorteil, daß die Tiere den ganzen Tag über mit Futter versorgt werden und trotzdem die gewünschte Futtermenge pro Tag genau eingehalten werden kann. Es entspricht der Natur des Tieres mehr, während des ganzen Tages nach Wunsch zu fressen, als dem Menschen angepaßte genaue Mahlzeiten einzuhalten. Die Tiere sind zufriedener, Futteraufnahme und Milchleistung steigen, und die ganze Anlage kommt mit einem Transportbehälter aus.

In den Zeichnungen wird ein Ausführungsbeispiel der Erfindung dargestellt, welches nachstehend näher beschrieben wird.

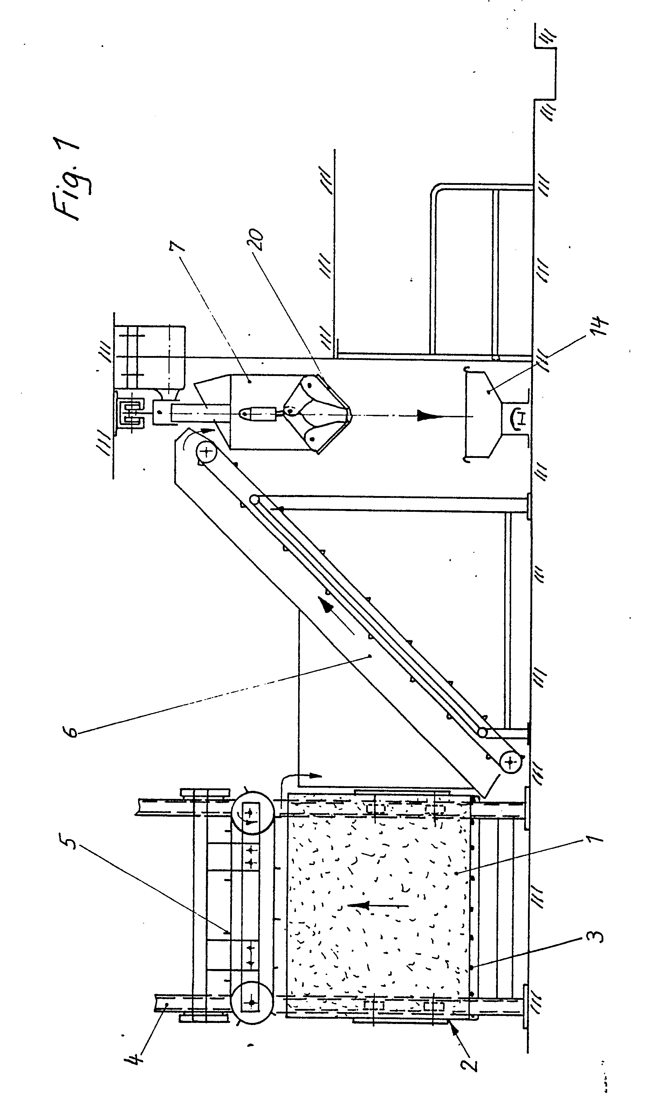

Fig. 1 zeigt die Befüllstation, bestehend aus einer Ballen-Fräsvorrichtung und einem Förderband.

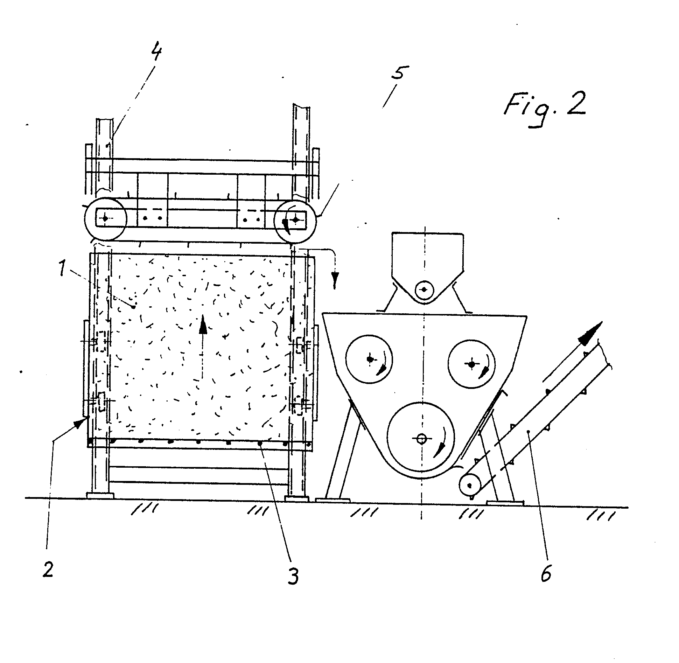

Fig. 2 zeigt die Erweiterung de Befüllstation durch eine Futtermischanlage mit einem Kraftfutterbehälter.

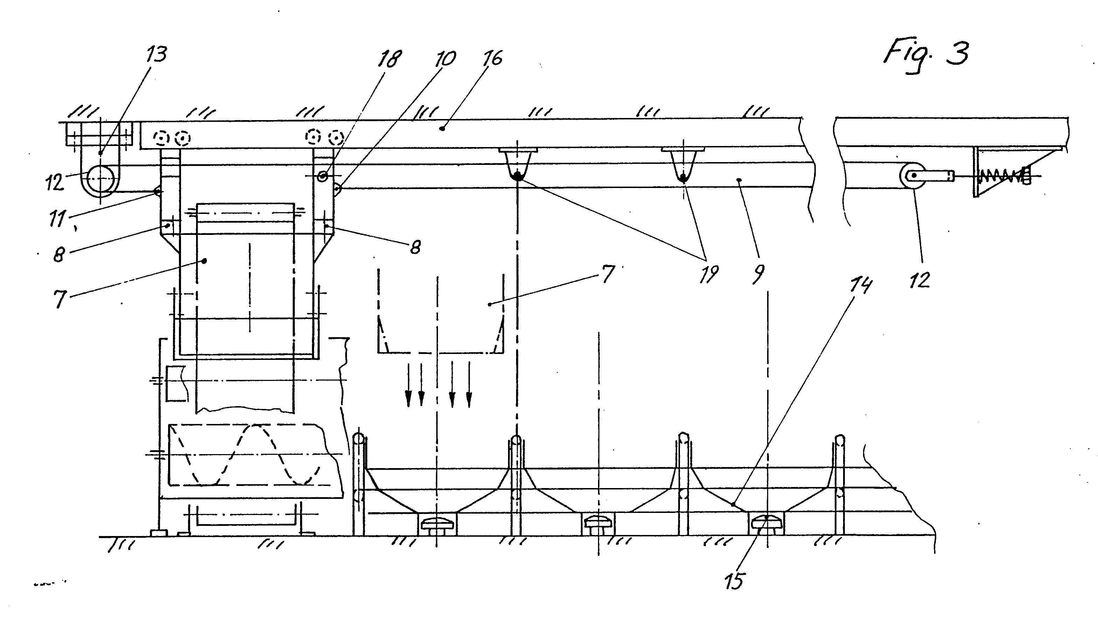

Fig. 3 zeigt den in einer Hängebahnschiene geführten Transportbehälter und die Futterplätze.

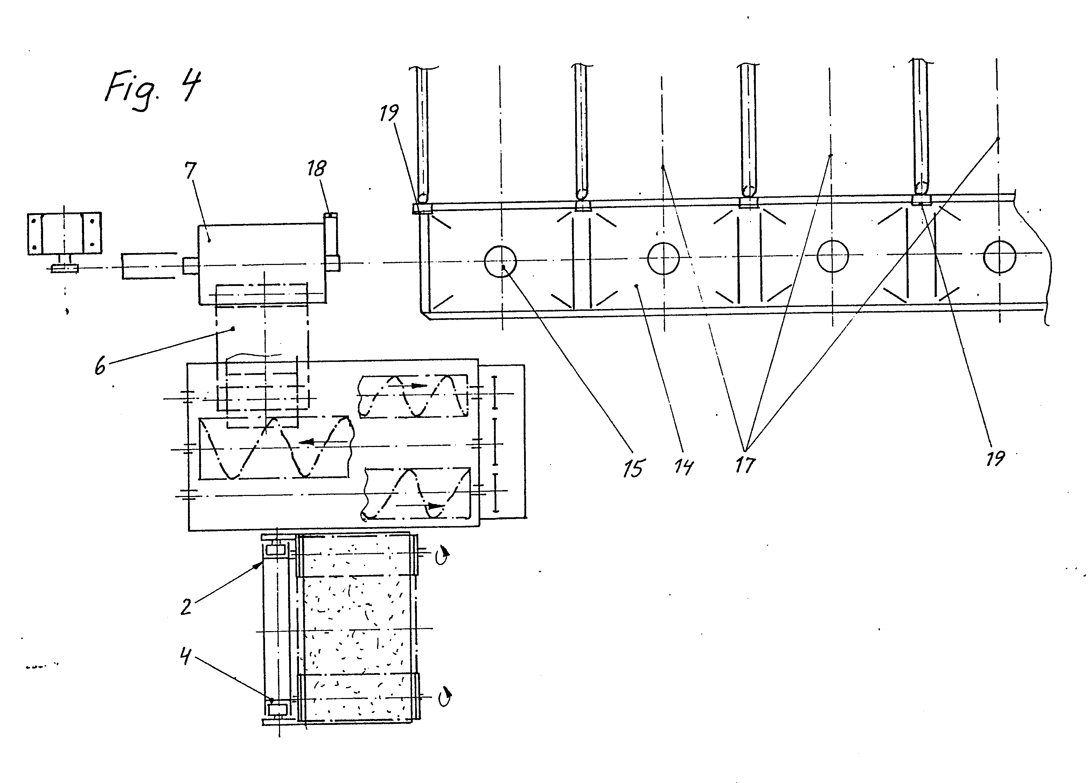

Fig. 4 zeigt eine Draufsicht zu Fig. 33.

Nach dem Leerfressen der Futterschale 14) ist das Vieh in der Lage, durch Anstoßen des Drucktasters 15) mit dem Maul, neues bzw. frisches Futter anzufordern. Der Vorgang läuft wie folgt ab:

Ein mit einem nicht dargestellten Blockschneider aus einem Flachsilo entnommener Futterballen 1) wird auf der Plattform 3) der Ballenfräsvorrichtung 2) in der Vertikalführung 4) nach oben geführt und von den umlaufenden Fräswerkzeugen 5) abgefräst. Das abgefräste Futter wird vom Förderband 6) aufgenommen und dem Transportbehälter 7) zugeführt. Am Transportbehälter 7) befinden sich Gewichts-Meßdosen 8), die bei Erreichung der vorgegebenen Futtermenge Ballenfräsvorrichtung 2) und Förderband 6) ausschalten und andererseits den Transportbehälter 7) über die Antriebsstation 13) und dem über Rollen 12) geführten Seil 9), welches an den Befestigungspunkten 10) u. 11) angebracht ist, einschalten. Der in der Hängebahnschiene 16) geführte Transportbehälter 7) führt bis zum Futterplatz 17)und der zugeordneten Futterschale 14), wobei er über Induktionsschalter 18) u. 19) oder dergl. gesteuert wird. Die Kippmulde 20) des Transportbehälters 7) öffnet sich und die Futtermenge fällt in die Futterschale 14). Der Transportbehälter 7) fährt in seine Ausgangslage zurück und wartet auf den nächsten Kontakt von einer Futterstelle 14).

Das Auslösen de Ablaufzyklusses kann auch durch Futtergewicht oder Lichtschranken verursacht werden.

Der Bedarf ist auch eine Zeitsteuerung oder Mengenbegrenzung einstellbar.

## Ansprüche

1. Automatische Fütterungsanlage für Rindvieh mit einem in Schienen geführten Transportgerät, welches eine Anzahl nebeneinanderliegender Futterplätze versorgt, dadurch gekennzeichnet, daß Ballen-Abfräsvorrichtung, Förderband u. Transportbehälter, in Reihe geschaltet, durch Kontaktgabe von einem Drucktaster an oder in der Futterschale eines Futterplatzes bis zur Befüllung des Transportbehälters eingeschaltet werden, wobei über Gewichts-Meßdosen unter gleichzeitiger Abschaltung von Ballen-Abfräsvorrichtung und Förderband, der gefüllte Transportbehälter über einen Antrieb zum Futterplatz in Bewegung versetzt wird.

2. Automatische Fütterungsanlage nach Anspruch 1, dadurch gekennzeichnet, daß ein Transportbehälter alle Futterplätze anfahren kann.

3. Automatische Fütterungsanlage nach Anspruch 1, dadurch gekennzeichnet, daß der Kontakt auf den Drucktaster direkt vom Tier ausgelöst wird.

4. Automatische Fütterungsanlage nach den Ansprüchen 1 - 3, dadurch gekennzeichnet, daß zwischen Ballen-Abfräsvorrichtung und Förderband eine Futtermischanlage, die mit einer Kraftfutter-Dosiereinrichtung versehen sein kann, angeordnet ist.

5. Automatische Fütterungsanlage nach den Ansprüchen 1 - 4, dadurch gekennzeichnet, daß die Gewichts-Meßdosen durch eine Volumen-Meßeinrichtung ersetzt werden kann.

6. Automatische Fütterungsanlage nach den Ansprüchen 1 - 5, dadurch gekennzeichnet, daß jedem Futterplatz ein Drucktaster zugeordnet ist.

7. Automatische Fütterungsanlage nach den Ansprüchen 1 - 6, dadurch gekennzeichnet, daß der Drucktaster durch eine andere Schalteinheit ersetzt werden kann.

8. Automatische Fütterungsanlage nach den Ansprüchen 1 - 7, dadurch gekennzeichnet, daß der Transportbehälter über End-oder Näherungsschalter, die jedem Futterplatz zugeordnet sind, geöffnet wird.

9. Automatische Fütterungsanlage nach den Ansprüchen 1 - 8, dadurch gekennzeichnet, daß das Transportgerät als Kippmulde ausgebildet ist und an einer Hängebahnschiene geführt wird.

10. Automatische Fütterungsanlage nach den Ansprüchen 1 - 9, dadurch gekennzeichnet, daß die Futterschale federnd aufgehängt ist und nach Abnahme des Futtergewichtes die Auslösung des Fütterungszyklusses veranlaßt.

Fig. 1

0 254 171

0 254 171

Fig. 2

Fig. 3

0 254 171

Fig. 4

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | LANDTECHNIK, Band 35, Nr. 7, Juli 1980, Seiten 313-315, Lehrte; H. PIRKELMANN "Automatische Futterverlage im Anbindestall" * Abbildungen 1, 2 * | 1,2 | A 01 K 5/02 |
| A | idem | 9 | |
| | --- | | |
| Y | DE-A-1 782 748 (F. HOWALDT) * vollständiges Dokument * | 1,2 | |
| | --- | | |
| A | US-A-3 698 685 (R.A. LANG) * Figur 1 * | 3,6,7 | |
| | --- | | |
| A | GB-A-2 035 822 (C.E. WALLEY) * Seite 1, Zeilen 5-15 * | 4 | |
| | --- | | RECHERCHIERTE SACHGEBIETE (Int. Cl.4) |
| A | GB-A-2 027 670 (A.R. DUNCAN) * Seite 1, Zeilen 3-5; Figur 1 * | 4 | A 01 K 5/00 . A 01 K 7/00 |
| | --- | | |
| A | LANDTECHNIK, Band 34, Nr. 2, 1979, Seiten 69-71, Lehrte; F. WENDLING "Volumen- oder Gewichtsdosierung für die Kraftfutterfütterung" * Abbildungen 1, 7 * | 5 | |
| | ----- | | |

Der vorliegende Recherchenbericht wurde für alle Patentansprüche erstellt.

| Recherchenort | Abschlußdatum der Recherche | Prüfer |
|---|---|---|
| BERLIN | 08-10-1987 | WUNDERLICH J E |